# EUROPEAN PATENT SPECIFICATION

(11) **EP 3 894 269 B1**
(45) Date of publication and mention of the grant of the patent: **21.02.2024**
(21) Application number: 19805315.9
(22) Date of filing: 21.11.2019
(51) Int. Cl.: B60L 53/63, B60L 53/65, B60L 53/67, G06Q 50/30, B60L 53/68, G06Q 10/02, G06Q 50/06

(54) **METHOD FOR MANAGEMENT AND PLANNING OF ENERGY FLOWS INTENDED FOR CHARGING ELECTRIC VEHICLES IN AN ELECTRICAL GRID**
VERFHAREN ZUR VERWALTUNG UND PLANNUNG DER ENERGIEFLÜSSE ZUM LADEN ELEKTRISCHER FAHRZEUGE IN EINEM STROMNETZ
PROCÉDÉ DE GESTION ET DE PLANIFICATION DE FLUX D'ÉNERGIE DESTINÉ À CHARGER DES VÉHICULES ÉLECTRIQUES DANS UN RÉSEAU ÉLECTRIQUE

(30) Priority: 14.12.2018 IT 201800011088
(43) Date of publication of application: 20.10.2021
(73) Proprietor: Vismara, Mario Andrea, 23880 Casatenovo (LC) (IT)
(72) Inventor: Vismara, Mario Andrea, 23880 Casatenovo (LC) (IT)
(74) Representative: Modiano, Micaela Nadia
(86) International application number: PCT/EP2019/082047
(87) International publication number: WO 2020/120095

(56) References cited:
- EP-A1- 3 343 726
- WO-A1-2018/204818
- WO-A2-2011/109460
- WO-A2-2013/057587
- US-A1- 2014 340 038
- US-A1- 2017 282 736
- US-B2- 9 815 382

## Description

The present invention relates to a method for management and planning of energy flows intended for charging electric vehicles in an electrical grid.

The continuous increase in vehicles powered by electricity, to the detriment of vehicles with internal combustion engines, will certainly have repercussions on the electrical grids.

In the short to medium term, it has been calculated that the overall increase in consumption attributable to powering vehicles will not have a major impact on energy consumption overall.

In the long term, however, the powering of electric vehicles can have perceptible repercussions on the overall consumption of electric power, with the consequent necessity for increase in production.

In any case, even in the short term, the consumption attributable to recharging electric vehicles will determine a modification of the overall pattern of consumption daily, weekly and, in general, periodically.

It is reasonable to think that the energy consumption necessary for electric vehicles will not be distributed uniformly over the course of the day; there will be time bands with maximum consumption followed by others with low consumption.

Similarly, the areas that will originate such consumption will also be in specific locations, as a function of certain factors such as for example what time of year it is. Such variables will contribute to increasing the level of unpredictability of part of the electricity consumption.

It must further be considered that currently there are various different types of recharging for electric vehicles: some recharging methods are particularly rapid, while others are more or less slower. Each type of recharging requires the use of different amounts of electric power, for which the operators of the charging points must be equipped.

Each operator of charging facilities must therefore have, via its contract with its respective supplier of electric power (identified by a POD number), the necessary power committed in order to provide its service. However, it is evident that, as a function of the periodic and daily oscillations of recharging sessions, their type and their extent, all the power committed (contractually) may or may not be completely utilized (or, in a hypothetical limit condition, it may even be insufficient).

The above background enables to hypothesize that a consequence of the growth of electric mobility is an unpredictable use of electric power, exacerbating the problems that already exist today of unbalancing of the electrical grid, and the search for a solution to this problem has led to the development of "smart grids".

Smart grids are a combination of an information network with an electricity distribution grid, by way of a bidirectional dialog in which the flows of electricity and information can be exchanged between producers, distributors, users and end customers.

Using smart grids, it is therefore possible to schedule the production of electric power, i.e. to define how much to produce over the course of the day and where to send it. US 9 815 382 B2 discloses a method for management and planning of energy flows intended for charging electric vehicles in an electrical grid, comprising: defining a system for control and management of the charging of electric vehicles that is suitable for the booking of each individual electric power delivery point of at least one charging facility for electric vehicles, by a respective user account; associating with a main server of said system at least one first supervision and control unit which is functionally associated with at least one supplier of electric power; acquiring from said system strings of data relating to the bookings of future charging operations and transmitting them to the at least one first supervision and control unit. EP 3 343 726 A1 discloses a method for management and planning of energy flows intended for charging electric vehicles in an electrical grid according to the state of the art. WO 2018/204818 A1 discloses re-configuring the electrical grid /micro grids as a function of the energy consumption.

The aim of the present invention is to solve the above mentioned drawbacks, by providing a method for management and planning of energy flows intended for charging electric vehicles in an electrical grid which makes it possible to predict the consumption of the charging facilities.

Within this aim, an object of the invention is to provide a method for management and planning of energy flows intended for charging electric vehicles in an electrical grid which ensures the production and distribution of electric power as a function of the envisaged consumption.

Another object of the invention is to provide a method for management and planning of energy flows intended for charging electric vehicles in an electrical grid which makes it possible to provision energy for the operators of charging facilities and for the operators of the electricity market at the best tariffs.

Another object of the present invention is to provide a method for management and planning of energy flows intended for charging electric vehicles in an electrical grid which is of low cost, easily and practically implemented and safely applied.

This aim and these objects are achieved by a method for management and planning of energy flows intended for charging electric vehicles in an electrical grid, and the corresponding system, according to the appended claims.

Further characteristics and advantages of the invention will become better apparent from the detailed description that follows of a preferred, but not exclusive, embodiment of the method for management and planning of energy flows intended for charging electric vehicles in an electrical grid according to the invention, which is illustrated by way of non-limiting example in the accompanying drawings wherein:

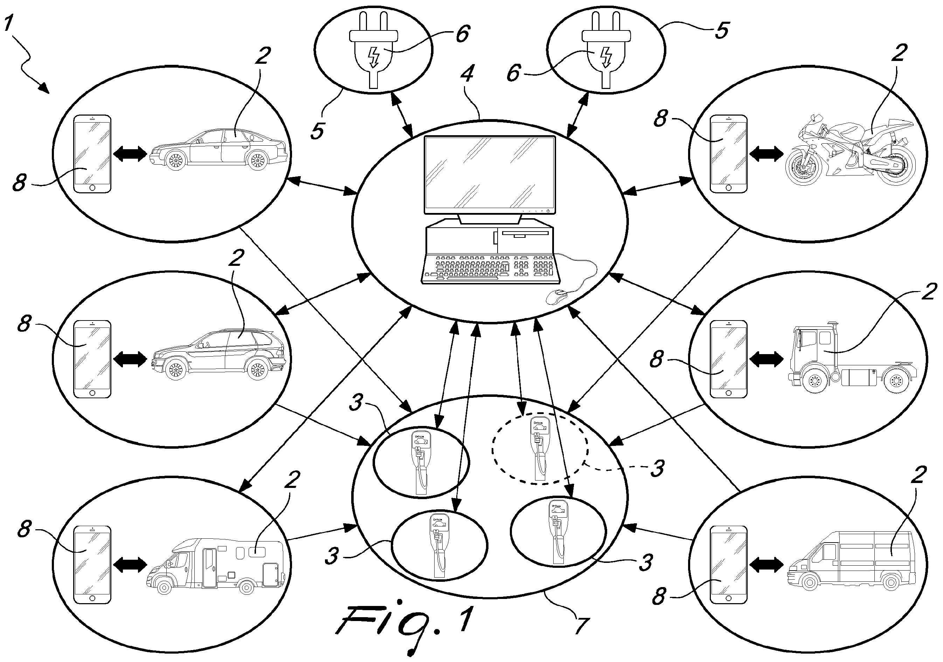

Figure 1 is a block diagram of a system for control and management of the charging of electric vehicles which makes it possible to implement the method according to the invention.

With particular reference to the figure, the reference numeral 1 generally designates a system for control and management of the charging of electric vehicles 2.

The term "electric vehicles" 2 as used here should be understood to comprise all vehicles with exclusively electric motor drives and also all vehicles with hybrid motor drives (which can be driven, even if only for limited distances, by their electric motors).

The method for management and planning of energy flows intended for charging electric vehicles 2 in an electrical grid according to the invention entails the implementation of a sequence of operations to be carried out in order to optimize the use of the electrical grid.

In a first step, it in fact becomes necessary to define a system 1 for control and management of the charging of electric vehicles 2 that is suitable for the booking of each individual electric power delivery point of at least one charging facility 3 for electric vehicles 2, by a respective user account.

A user account can comprise a plurality of data and credentials and is generally chosen between a user, a driver, a corresponding electric vehicle 2, the person jointly liable for the vehicle 2 and any combination of these elements.

In a second step, it will become necessary to associate with a main server 4 of the system 1 at least one first supervision and control unit 5 which is functionally associated with at least one supplier of electric power 6.

The supervision and control unit 5 can be constituted by the computer platform governing an electrical grid (or a part thereof) or by the computer platform of a predefined supplier 5, although the possibility is not excluded of using different platforms deriving from a combination of the foregoing and/or by different computer structures for controlling and management of the electrical grid.

Then comes a third step, during which it is necessary to acquire from the system 1 strings of data relating to the bookings of future charging operations gathered by at least one charging facility 3 for electric vehicles 2 and transmit them to the at least one first supervision and control unit 5.

Then comes the last step of the process, which involves the configuration of the electrical grid as a function of the envisaged energy consumption, in relation to the booked charging operations (for which the strings of data have been received).

It should be noted that the configuration of the electrical grid, as a function of the energy consumption ascribable to the booked charging operations, consists of increasing electric power at the regions where many charging sessions have been reserved and of reducing it in the other regions.

Such increase in energy in localized areas is advantageously obtainable via the redirection of flows of electric current from the regions where there have been reductions along the electric power lines that lead to the regions where many charging sessions have been reserved or via variations of the generation of electric power in respective power generation stations assigned to those regions.

It should furthermore be noted that the acquisition and transmission, by the system 1, of strings of data relating to bookings of future recharging operations for the future configuration of the electrical grid, consist of calculating the energy demand for the charging of electric vehicles 2 within a predefined geographic region (in which several specific charging facilities 3 are sited), by summing the expected withdrawals of power from each stall of each charging facility (3) that is present in that region.

Once such calculation has been performed, this then allows the planning and scheduling of the assignment of a pre-established quantity of power for the recharging of electric vehicles 2 to a predefined region.

Such pre-established quantity of power will necessarily need to be at least equal to the energy demand calculated for that region.

The assignment will be performed via a suitable configuration of the electrical grid.

It should furthermore be noted that the calculation of the energy demand can positively be updated in real time, as a function of any cancellations of bookings and/or the making of new bookings for future charging sessions (made by a user account), with consequent updating of the allocation of the quantity of power for the charging of electric vehicles 2 to a previously-planned predefined region.

In practice it will therefore also be possible to make adjustments, with respect to the planning carried out which resulted in a certain configuration of the electrical grid, as a function of the variations in electric power committed to recharging which can be discerned following changes to bookings of charging facilities 3.

This shows that the method according to the invention enables an optimal configuration of the electrical grid as a function of the envisaged consumption for recharging electric vehicles 2, while also ensuring the possibility to make corrections and adjustments in real time, as a function of information indicating the variation of the expected consumption.

The present invention also extends its protection to include a system 1 for control and management of the charging of electric vehicles 2 of a type chosen from vehicles with exclusively electric motor drives and vehicles with hybrid motor drives.

The system 1 comprises:
- at least one main server 4, which can be physically located at a specific provider of the service for control and management or defined in a respective area of a remote and remotely-managed data processing center;
- at least one telecommunications network (not specifically shown in the accompanying figures) which can be constituted by an internet network, by a telephone network, by a radiofrequency network, by an electrical grid, by an optical network and/or by any combination of the aforesaid networks and other networks in use at the moment of implementation of the present invention;

- at least one first supervision and control unit 5 which is functionally associated with at least one supplier of electric power 6 and is interfaced with the at least one main server 4 via the telecommunications network. The suppliers of electric power 6 are, effectively, suppliers of the operators of charging facilities 3, but they are also suppliers of the users of the vehicles 2, who, almost certainly, will have an associated electricity user account, civil, commercial or industrial, with a respective supplier 6: each user account will conveniently be associated with a respective POD code (the characteristics of this code will be described briefly below). Each supplier of electric power 6 which is functionally associated with a respective second supervision unit 5 will therefore be able to positively comprise means for transceiving, to the main server 4, strings of data relating to the availability of electric power and associated tariffs in specific regions. The availability of electric power in a given region is influenced by a plurality of factors, such as seasonality (in fact energy originating from renewable sources is produced mostly at certain periods of the year), the variation of consumption by local user accounts, or the compartmenting of the various areas of the electrical grid for reasons of management. This determines a possible reduction of the costs of allocating energy in predefined regions and at certain periods, therefore making it more or less advantageous for the operators of the charging facilities 3 to purchase energy and, optionally, mount promotional campaigns with specific discounts that can be communicated to end users;
- at least one second supervision and control unit 7 for the charging facilities 3 of at least one operator of charging facilities 3 for electric vehicles 2; such unit 7 can be considered as a virtual component, meaning by such definition that it may be an entity existing in reality or it may be defined solely as the platform through which the operator of charging facilities operates on its network of facilities and the corresponding operation methodology;
- at least one computer 8 associated with a user account chosen between a user, a driver, a corresponding electric vehicle 2, the person jointly liable for the vehicle 2 and any combination thereof, considering that such computer 8 could be any device that is adapted to interface with the vehicle 2 and is capable of accessing the aforementioned telecommunications network. The computer 8 could therefore be any smart device (therefore a smartphone, a tablet, a smartwatch), a personal computer and/or a similar apparatus, or even the computer on board the vehicle 2 itself, which will need to be provided with the data and with the credentials of the user account (usually provided in the automotive/infotainment technology of the vehicle 2).

It should be noted that the user account (as defined in the present discussion) should be understood as the set of information that makes it possible to uniquely identify at least one of the following elements:
- identification details of the driver/user, who uses the computer 8 in order to be able to use the system 1. Such data comprise the name, surname, address, date of birth, tax identification code and any other information that may be necessary;
- identification details of the vehicle 2 with which the computer 8 is associated, for the correct use of the system 1. The details of the vehicle 2 can by way of example comprise the license plate, the chassis number, the recharging credentials, the type of recharging, and the identification details of the person jointly liable;
- the credentials for connecting to the control electronics of the vehicle 2, for the acquisition of information relating to, for example, the residual charge of the storage batteries, the energy consumption, the route programmed on the respective satellite navigation system and the like;
- the financial details of the person (physical or legal) to be billed for the cost of the recharge;
- the data of the electric power supply contract to which to charge the costs for recharging the vehicle 2, including a code composed of letters and numerals (POD code) which identifies with certainty the physical point in the national territory where the energy is delivered by the supplier and received by the end customer with specific identification of the latter as well.

The server 4 will be adapted to be connected, via the telecommunications network, to the at least one second supervision and control unit 7 of at least one operator of electric charging facilities 3 for vehicles 2, the at least one computer 8 being associated with the user account and with the at least one first supervision unit 5, for the purpose of executing all operations comprising bookings, and/or corresponding cancellations, of at least one stall of at least one charging facility 3.

The server 4 will further handle the sharing of the effects of such operations with a predefined number of computers 8 which are associated with respective user accounts and with a predefined number of suppliers 6.

By virtue of the information shared by the server 4, the suppliers 6 will be able to know the committed energy envisaged for future booked charging operations (since they can use this data to reconfigure the electrical grid and optimize it); the computers 8 associated with the user accounts will be able to provide information relating to the availability (or non-availability) of stalls at charging facilities 3 in a specific region at dates and times of interest.

The server 4 will transfer the strings of data received from the first units 5 to the operators of the charging facilities 3 that are present in such specific regions, who will also be able to modify their normal levels of energy allocation as a function of such data.

Each supplier of electric power 6 functionally associated with the first supervision unit 5 can also comprise means for transceiving, to the main server 4, strings of data relating to the availability and tariffs of electric power in specific regions, and the server 4 in turn will transfer the strings of data to the operators of the charging facilities 3 that are present in such specific regions.

As previously explained above, the at least one computer 8 associated with a respective user account is of a type preferably selected between a device of the type of a smartphone, a tablet, a personal computer, a handheld computer, a smartwatch, an onboard computer of the vehicle 2, and the like.

What is essential is that the computer 8 is capable of executing the instructions of a specific software application (which could also advantageously be designed for satellite navigation or be functionally associated with a specific navigation application and/or with an additional navigation device that implements it) governed by the technical data relating to consumption and the status of the battery of the vehicle 2 and by the settings programmed by the user/driver, or by a specific satellite road navigation system of the vehicle and with the second supervision and control unit 7 associated, also, with the main server 4 via the telecommunications network.

The computer 8 (i.e. the smart device that will execute the instructions of the software application cited previously) will carry out an analysis of the condition of residual charge of the batteries of the vehicle 2 (from which it will calculate an estimate of the travel range, understood as the maximum distance that can be traveled) and a schedule of the routes and of the necessary stops at charging facilities 3 (stops necessary to compensate for the reduced maximum capacity of the electric vehicles 2).

The at least one computer 8 further comprises apparatuses for transceiving data to the second supervision and control unit 7 for the booking of charging facilities 3, as a function of a specific programmed route on specific dates and at specific times.

In particular it will be possible to plan a trip, indicating the starting point and the arrival point and specifying the date of the trip and the expected departure time (or the time at which the driver wants to arrive at the destination).

In this manner the computer 8 by way of a navigation program (installed on the computer 8 itself or on an additional device connected to it) can calculate the best route, factoring in, along such route, the necessary stops for recharging the batteries and the duration of the recharge operations, in the first case providing the time of arrival and in the second case the time of departure. The stops will be scheduled at specific charging facilities 3 which the system considers the most suitable taking into account the discriminating factors set by the user/driver on the computer 8; if required the computer 8 can also proceed automatically to book the charging facilities for the time band envisaged by the navigation program.

Once the trip has been planned, therefore, the user of the vehicle 2 will have an ideal route, along which will be the scheduled stops and stopovers necessary to perform the recharging operations to enable the vehicle 2 to complete the desired route, confirming the booking that will commit such charging facilities 3 at the envisaged date and time for the stop, thus ensuring an uneventful and successful trip.

In fact the booking will render the designated charging facility 3 (or a specific charging post thereof) unavailable to other users for the time interval that corresponds to the booking: in this manner the vehicle 2 identified in the booking can arrive at the charging post and immediately plug in to carry out the charging operations without having to wait for it to become free because it cannot be used by any other user/driver except the one that made the booking, for the entire duration of the booking.

More specifically, it should be noted that the computer 8, by way of the software application installed on it, can advantageously also make changes in real time to the bookings of charging facilities 3.

Such changes can consist of canceling active bookings and of making new bookings: this is particularly useful because it makes it possible to change the planned route due to unforeseen requirements.

For example, as a function of the value of the residual charge of the batteries and of the road mobility/traffic conditions along the route programmed on the satellite navigation system, it will be possible to estimate the impossibility of reaching a charging facility 3 that was booked initially (or the impossibility of reaching it at the time for which the booking has been made), thus making it preferable to cancel the existing booking and make a new booking. Estimating the reachability of the facility that was booked initially and observing the booking times will be possible by virtue of the fact that the software application reads instant by instant the residual charge of the batteries, the geolocation of the vehicle 2 and the road mobility/traffic conditions, interpolating such data and executing very reliable calculations for the trip that is being made with the electric vehicle 2.

It should furthermore be noted that the main server 4 comprises at least one generator of strings of data for sending, to the second supervision and control unit 7 for the charging facilities 3, real-time information relating to the booking and corresponding cancellation of specific charging facilities 3 and for sending, to the computers 8 associated with user accounts related to specific electric vehicles 2 in transit proximate to the charging facility 3 for which a cancellation of booking has been sent, an alert that the facility 3 has unexpectedly become available.

This makes it possible to optimize the use of the network constituted by all the charging facilities 3: in fact the vehicle 2 linked to the user account for which a booking exists for which a cancellation is sent, can conveniently proceed to make a new booking of a facility that is a better match for the new requirements; at the same time all the other vehicles 2 that are proximate to the charging facility 3 for which the booking has been canceled (or which will arrive proximate to it at the time it was previously booked for and which is now available) will receive an alert of their availability on the computer 8 with which their user account is synchronized. In this manner the use will be encouraged of the charging facilities 3 in the intervals of time which previously corresponded to bookings that were subsequently canceled.

Each user who cannot reach the charging facility 3 by the booked time will be encouraged by the software application to send the cancellation of the bookings, by way of the emission of visual indicators (messages that appear on a display), acoustic indicators (sound messages) and the like.

If the user does not cancel a booking, it will be possible for fines to be imposed on that user, because his or her conduct did not allow an optimal use of the network of charging facilities 3 and deprived other users/drivers transiting through the region of the opportunity to recharge their batteries.

The penalty imposed on the user/driver who does not cancel the booking or who arrives late (recharging only a part of what was envisaged with the booking) can be for example equal to the tariff charged by the operator of the facility 3, net of the current not delivered. In this way the operator of the facility 3 is ensured the easement of lost earnings, which is constituted by service obligations and not by energy not delivered.

The operation described also has a positive repercussion on the planning of the assignment of electric power carried out by the suppliers 6, in that they will be able to use the information relating to bookings of each charging facility 3 (by consequently calculating the quantity of power necessary with reference to the date and time when it will be drawn). On the basis of this information it will be possible for the supplier 6 (or for an energy platform used by the various suppliers 6) to evaluate the best strategy (for example a reconfiguration of the electrical grid and/or an increase/decrease of energy production by a capable power station) for allocating the right quantity of power in the region of interest, routing it to the charging facilities 3 present in that region.

The possibility of having updates in real time of the bookings (and of any associated cancellations) further makes it possible to continuously update the configuration of the electrical grid (via corrections and different transmissions of the energy flows), thus optimizing its yield.

It should furthermore be noted that in Italy there are almost 300 different suppliers of electric power 6 (which are constantly in contact with the electricity market), with which civil, commercial and industrial electricity user accounts (electricity meters) are usually activated. Such suppliers 6 are, in turn, suppliers of the various operators of charging facilities 3 that are present in the region.

The system 1 and the method according to the invention enable access to the main server 4 also for the first units 5 which are connected to the suppliers 6 so as to enable the bidirectional exchange of information: from suppliers 6 to operators of facilities 3 and from operators of facilities 3 to suppliers 6 (more generally, a bidirectional exchange of information between the first unit 5 and the second unit 7).

By way of example, it should be noted that in periods where the supplier 6 will have excess electric power available for sale (think of regions or periods of the year in which the production of electric current from renewable sources is very prominent, such as, for example, in summer for photovoltaic plants and hydroelectric plants), the supplier will be able to promote it with operators of charging facilities 3 that are its clients, by sending alerts of the availability of this power in real time to the main server 4. It will be the operator of charging facilities 3 who will receive such information, and that operator will communicate to the main server 4 how much of this promotion it wishes to pass on to the market and how much it wishes to keep for itself, adapting its tariffs as a consequence (it should be noted that the software installed on the computer 8 will allow the user account to select the navigation mode that prefers the cheapest route, which does not necessarily correspond to the shortest one; the system 1 (or the software that will manage it) in this way will prefer stops at the facilities 3 that offer the lowest tariffs and which are located on the route deemed the most economic).

This practice, in addition to making it possible for the end user to save money and to maximize the profits of the operators of charging facilities 3 and of the suppliers 6, also contributes to triggering a process of balancing the electricity consumptions, which will be more important the greater the number of suppliers and operators that participate in the system 1, in tandem with the growth of electric mobility (triggering a virtuous circle).

With regard to the method of payment permitted over the system 1 and the method according to the invention, it is necessary to highlight that each time a booking of a charging facility 3 is made, the software application will generate a unique code to be entered (there are other technologies that could avoid having to enter a code, all of which are within the scope of the inventive concept described herein: NFC technology, for example, would make it possible to validate the recharging session simply by holding the computer 8 up to the charging post) on the charging post of the charging facility 3 that has been booked, in order to validate the recharging session.

Such unique code will depend on a series of other factors, which also include the POD code associated with the driver/user or with the vehicle 2. The POD (Point Of Delivery of the electricity) code is a code composed of letters and numerals which identifies with certainty the physical point in the national territory where the energy is delivered by the supplier and received by the end customer, and therefore it also identifies the customer. Because it identifies a physical point on the distribution network and therefore a specific user account, the code generally does not change even if the supplier changes.

The algorithm that generates the unique code to be entered on the charging post of the booked charging facility 3 therefore takes into consideration the POD number (associated with the user account and therefore inserted in the software application running on the computer 8) of the supplier 6 with which the user/driver (the driver or user of the vehicle 2) stipulated the electricity supply contract.

The operator of the charging facility 3, at the end of each recharging session, will send the main server 4 the effective consumption data (effective, because if the user/driver arrives late and recharge only a part of the booked recharging session then the consumption data will not correspond to the data expected in the booking) of the recharging session carried out by the user/driver.

Such data will be sent to a database which will be accessed by the various participating suppliers 6 (through the respective first units 5). The information sent to the database will comprise, in addition to the details of the user/driver, also the identification of the operator of the charging facility 3, the commercial tariffs applied by that operator, the energy drawn by the user/driver, the energy supplier 6 that supplies the operator of the charging facility 3 (for example the POD code associated with the user account of the operator 3) and the energy supplier 6 that supplies the user/driver.

To simplify the relations between the suppliers 6, the operators of the charging facilities 3 and the users/drivers (end users) it may be necessary to use the "single buyer" model, in order to "certify" the exchanges and the information relating to the various parties involved.

In such case, the database could also be interfaced or even coincide with the country's Integrated Information System (in Italy the SII, http://www.acquirenteunico.it/attivita/sistema-informativo), from which the suppliers 6 participating in the system 1 and/or in the SII will be able to draw the necessary information.

Once the information necessary for billing has been obtained, two cases are possible.

The simpler case is when the supplier 6 of the operator of the facility 3 is the same as that of the end user/driver: in this case, the supplier 6 will bill the amount for the recharging session directly in the bill for the user/driver, and will credit the operator of the facility 3 with an equivalent amount. Alternatively, the supplier can credit the operator of the facility 3 with the difference between the cost of the raw material used by it for the recharging session (without charging it in the bill) and the amount billed to the user/driver.

If the two suppliers 6 are not the same, then using the information collected from the database the various suppliers 6 involved can bill their clients also for charging sessions that those clients carried out at the facilities 3 of operators that are clients of other suppliers 6.

In this way, "lots" would be debited and credited between the various participating suppliers 6; such "lots" could be negotiated as compensation, making it possible to settle balances between the various suppliers 6 solely.

The system for settling payments between suppliers 6 and the respective clients that are operators of facilities 3 remains unaltered and is resolved as explained above if the supplier 8 of the operator of the facility 3 and of the user/driver coincide.

This compensation system, if it can be implemented, could allow the direct debiting of charging sessions carried out, to the bills of the users/drivers, while at the same time limiting the transactions involved in the overall process.

In order to confer a form of "certification" on all the transactions in play, and to facilitate the correct identification of the end users/drivers, suppliers 6 and corresponding POD codes, the "single buyer" model could be key.

In practice each region, province, department and the like can be referred to a local system 1, and bringing them together in a network will give national coverage; the possibility is not ruled out however that a single system may be referred only to a single operator of charging facilities 3 (although the greater advantage of the system 1 according to the invention lies in the creation of a recharging network in which all the charging facilities 3 of a plurality of separate operators are present). A series of systems 1 may be preferable, in that a network structure could enable the reduction of inconveniences owing to anomalies that may arise in one or more of the predefined systems 1, envisaging a system for mutual relief between systems. In any case, all the systems 1 present can therefore also dialog between each other, thus providing, in addition to all the information adapted to facilitate mobility, predictive information of the aggregate consumption of electric power at national, regional, and area level and the like, thus making it possible to schedule electricity production (see the discussion of electricity balancing).

A high number of scheduled bookings enables the operator of the charging facility 3 to learn the daily energy demand and to schedule the purchases of energy from its supplier 6 as a function of the consumption that can be ascribed to those bookings, and in turn the supplier 6 will be able to better negotiate the necessary amounts on the market, for example by reducing costs deriving from unfulfilled bookings, while the body that runs the transmission grids, in addition to being able to balance production on the basis of predicted consumption, will also be able to better organize and resolve any maintenance or outages on distribution lines, at power generation stations, and also at transforming and switching stations, guarding against the well-known phenomenon of intra-zonal congestion, for example.

For the supplier 6, this means the possibility of carrying out scheduling and profiling of energy consumption, thus achieving the aim and the objects explained above.

Advantageously the present invention solves the above mentioned problems, by providing a method for management and planning of energy flows intended for charging electric vehicles 2 in an electrical grid which makes it possible to predict the consumption of charging facilities 3 and therefore optimize the yield of the electrical grid via operations to reconfigure and/or vary the energy produced.

Conveniently the method according to the invention ensures the production and distribution of electric power as a function of the envisaged consumption for recharging electric vehicles 2, by availing of a forecast that is highly reliable.

Usefully the method according to the invention will make it possible to provision energy for the operators of charging facilities 3 and for the suppliers 6 at the best tariffs.

Positively the method according to the invention is easily and practically implemented and of low cost: such characteristics render the method according to the invention an innovation that is safe in use, especially in light of the growing expansion of electric mobility.

In practice, the materials employed, as well as the dimensions, may be any according to requirements and to the state of the art.

This application claims priority from the disclosures in Italian Patent Application No. 102018000011088 .

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs .

## Claims

1. A method for management and planning of energy flows intended for charging electric vehicles (2) in an electrical grid, which consists of:
- defining a system (1) for control and management of the charging of electric vehicles (2) that is suitable for the booking of each individual electric power delivery point of at least one charging facility (3) for electric vehicles (2), by a respective user account;
- associating with a main server (4) of said system (1) at least one first supervision and control unit (5) which is functionally associated with at least one supplier of electric power (6) and is interfaced with said main server (4) via a telecommunications network;
- providing at least one second supervision and control unit (7) for charging facilities (3) of at least one operator of charging facilities (3) for electric vehicles (2), said second supervision and control unit (7) being associated with said main server (4) via said telecommunications network;
- providing at least one computer (8) associated with a user account chosen from a user, a driver, a corresponding electric vehicle (2), a person jointly liable for the vehicle (2) and any combination thereof, said at least one computer (8) being associated with said user account and with said main server (4), for the execution of operations comprising bookings of at least one stall of at least one charging facility (3), said operations being shared with a predefined number of computers (8) which are associated with respective user accounts and with a preset number of suppliers (6);
- said at least one computer (8) associated with said user account being of a type preferably chosen from a device of the type of a smartphone, a tablet, a personal computer, a handheld computer, a smartwatch, an onboard processor of the vehicle (2), said at least one computer (8) implementing a software application that is adapted to interface with:
- the batteries of the vehicle (2), for the analysis of their charging status and of any specific charging modes,
- a satellite road navigation system of the vehicle (2), or an additional navigation device connected to it, for planning routes and the necessary stops at charging facilities (3),
- said second supervision and control unit (7);
- sending, by the main server (4), to the second supervision and control unit (7) for the charging facilities (3), real-time information relating to the booking and corresponding cancellation of specific charging facilities (3) and sending, to the computers (8) associated with user accounts related to specific electric vehicles (2) in transit proximate to the charging facility (3) for which a cancellation of booking has been sent, an alert that the facility (3) has unexpectedly become available;
- acquiring from said system (1) strings of data relating to the bookings of future charging operations and transmitting them to the at least one first supervision and control unit (5);
- configuring the electrical grid as a function of the expected energy consumption in relation to said booked charging operations and information relating to the booking and corresponding cancellation of specific charging facilities, the configuration of said electrical grid as a function of the energy consumption consisting of increasing electric power at the regions where many charging sessions have been reserved and of reducing it in the other regions.

2. The method according to claim 1, **characterized in that** said energy increase is achieved via the redirection of flows of electric current along the electric power lines that lead to the regions where many charging sessions have been reserved and via variations of the generation of electric power in respective power generation stations assigned to said regions.

3. The method according to claim 1, **characterized in that** the acquisition and transmission from said system (1) of strings of data relating to the bookings of future charging operations for the future configuration of the electrical grid consist of:
- calculating the energy demand for the charging of electric vehicles (2) of a predefined region, by summing the expected withdrawals of power from each stall of each charging facility (3) that is present in said region;
- planning the allocation of a quantity of power for the charging of electric vehicles (2) to a predefined region, said quantity of power being not lower than the energy demand calculated for such region via a configuration of the electrical grid.

4. The method according to claim 3, **characterized in that** calculation of energy demand is updated in real time, as a function of any cancellations of bookings and/or the making of new bookings for future charging sessions, with consequent updating of the allocation of the quantity of power for the charging of electric vehicles (2) to a previously-planned predefined region.

5. A system for control and management of the charging of electric vehicles (2) in an electrical grid, said electric vehicles of a type chosen from vehicles with exclusively electric motor drives and vehicles with hybrid motor drives, comprising:
- at least one main server (4),
- at least one telecommunications network,
- at least one first supervision and control unit (5) that is functionally associated with at least one supplier of electric power (6) and is interfaced with said at least one main server (4) via said telecommunications network, said at least one first supervision and control unit (5) being adapted to receive data relating to the bookings of future charging operations,
- at least one second supervision and control unit (7) for charging facilities (3) of at least one operator of charging facilities (3) for electric vehicles (2),
- at least one computer (8) associated with a user account chosen from a user, a driver, a corresponding electric vehicle (2), a person jointly liable for the vehicle (2) and any combination thereof,
said main server (4) being adapted to be connected, via said telecommunications network, to said at least one second supervision and control unit (7) of at least one operator of electric charging facilities (3) for vehicles (2), said at least one computer (8) being associated with said user account and with said at least one main server (4), for the execution of operations comprising bookings of at least one stall of at least one charging facility (3), said operations being shared with a predefined number of computers (8) which are associated with respective user accounts and with a preset number of suppliers (6), said operations also comprising cancellation of said at least one stall, the information relating to bookings and/or cancellation of each charging facility (3) making it possible to calculate the quantity of power that will be drawn by said electric vehicles with reference to the date and time when it will be drawn, said at least one computer (8) associated with said user account being of a type preferably chosen from a device of the type of a smartphone, a tablet, a personal computer, a handheld computer, a smartwatch, an onboard processor of the vehicle (2), said at least one computer (8) implementing a software application that is adapted to interface with:
- the batteries of the vehicle (2), for the analysis of their charging status and of any specific charging modes,
- a satellite road navigation system of the vehicle (2), or an additional navigation device connected to it, for planning routes and the necessary stops at charging facilities (3),
- said second supervision and control unit (7) associated with said main server (4) via said telecommunications network;
- said at least one main server (4) comprising at least one generator of strings of data for sending, to the second supervision and control unit (7) for the charging facilities (3), real-time information relating to the booking and corresponding cancellation of specific charging facilities (3) and for sending, to the computers (8) associated with user accounts related to specific electric vehicles (2) in transit proximate to the charging facility (3) for which a cancellation of booking has been sent, an alert that the facility (3) has unexpectedly become available , said system adapted to configure the electrical grid as a function of the expected energy consumption in relation to said booked charging operations and information relating to the booking and corresponding cancellation of specific charging facilities (3), the configuration of said electrical grid as a function of the energy consumption consisting of increasing electric power at the regions where many charging sessions have been reserved and of reducing in other regions.

6. The system according to claim 5, **characterized in that** each supplier of electric power (6) functionally associated with said first supervision unit (5) comprises means for transceiving, to said main server (4), strings of data relating to the availability and tariffs of electric power in specific regions, said server (4) transferring said strings of data to said operators of the charging facilities (3) that are present in such specific regions.

7. The system according to claim 5, **characterized in that** said at least one computer (8) comprises apparatuses for transceiving data to said second supervision and control unit (7) for the booking of charging facilities (3), as a function of a specific programmed route on specific dates and at specific times.

## Patentansprüche

1. Ein Verfahren zur Verwaltung und Planung der Energieflüsse zum Laden elektrischer Fahrzeuge (2) in einem Stromnetz; bestehend aus:
- dem Bestimmen eines Systems (1) für die Steuerung und Verwaltung des Ladens elektrischer Fahrzeuge (2), das geeignet ist zum Buchen jedes einzelnen Stromabgabepunkts mindestens einer Ladevorrichtung (3) für elektrische Fahrzeuge (2) durch ein entsprechendes Benutzerkonto;
- dem Verknüpfen, mit einem Hauptserver (4) des Systems (1), mindestens einer ersten Überwachungs- und Steuerungseinheit (5), die funktionell mit mindestens einer Stromzuführvorrichtung (6) verknüpft und mit dem Hauptserver (4) über ein Telekommunikationsnetz verbunden ist;
- dem Bereitstellen mindestens einer zweiten Überwachungs- und Steuerungseinheit (7) für Ladevorrichtungen (3) mindestens eines Betreibers von Ladevorrichtungen (3) für elektrische Fahrzeuge (2), wobei die zweite Überwachungs- und Steuerungseinheit (7) mit dem Hauptserver (4) über das Telekommunikationsnetz verbunden ist;
- dem Bereitstellen mindestens eines Computers (8), der verknüpft ist mit einem Benutzerkonto, gewählt aus einem Benutzer, einem Fahrer, einem entsprechenden elektrischen Fahrzeug (2), einer Person, die ebenfalls für das Fahrzeug (2) verantwortlich ist, und einer beliebigen Kombination davon; wobei der mindestens eine Computer (8) mit dem Benutzerkonto und mit dem Hauptserver (4) verbunden ist, zur Durchführung von Vorgängen, die Buchungen mindestens einer Säule mindestens einer Ladevorrichtung (3) umfassen; wobei die Vorgänge mit einer vordefinierten Anzahl von Computern (8) geteilt werden, welche mit entsprechenden Benutzerkonten und mit einer vordefinierten Anzahl von Zuführvorrichtungen (6) verknüpft sind;
- wobei der mindestens eine mit dem Benutzerkonto verknüpfte Computer (8) von einem Typ ist, der vorzugsweise gewählt ist aus einer Vorrichtung vom Typ eines Smartphones, eines Tablets, eines PCs, eines Taschencomputers, einer Smartwatch, eines Onboard-Prozessors des Fahrzeugs (2); wobei der mindestens eine Computer (8) eine Softwareanwendung implementiert, die ausgebildet ist, um sich mit Folgendem zu verknüpfen:
- den Batterien des Fahrzeugs (2) zur Analyse ihres Ladezustands und eventueller spezifischer Lademodi,
- einem Satelliten-Straßennavigationssystem des Fahrzeugs (2) oder einem zusätzlichen mit ihm verbundenen Navigationsgerät zur Planung von Routen und den erforderlichen Halten an Ladevorrichtungen (3),
- der zweiten Überwachungs- und Steuerungseinheit (7);
- dem Senden, durch den Hauptserver (4), von Echtzeitinformationen bezüglich der Buchung und entsprechenden Löschung bestimmter Ladevorrichtungen (3) an die zweite Überwachungs- und Steuerungseinheit (7) für die Ladevorrichtungen (3),
und dem Senden einer Benachrichtigung, dass die Vorrichtung (3) unerwartet frei geworden ist, an die Computer (8), die mit Benutzerkonten verknüpft sind, welche mit spezifischen elektrischen Fahrzeugen (2) in Transit nahe der Ladevorrichtung (3) verknüpft sind, für welche eine Löschung der Buchung gesendet wurde;
- dem Abrufen von Datenstrings bezüglich der Buchungen zukünftiger Ladevorgänge aus dem System (1) und dem Senden derselben an die mindestens eine erste Überwachungs- und Steuerungseinheit (5);
- dem Konfigurieren des Stromnetzes in Abhängigkeit von dem erwarteten Energieverbrauch mit Bezug auf die gebuchten Ladevorgänge und Informationen bezüglich der Buchung und entsprechenden Löschung spezifischer Ladevorrichtungen, wobei die Konfiguration des Stromnetzes in Abhängigkeit vom Energieverbrauch in der Verstärkung des Stroms in den Bereichen, in denen viele Ladesitzungen reserviert wurden, und in der Verminderung desselben in den anderen Bereichen besteht.

2. Das Verfahren gemäß Anspruch 1, **dadurch gekennzeichnet, dass** die Energiezunahme erreicht wird durch Umlenken der Stromflüsse entlang den Stromleitungen, die zu den Bereichen führen, in denen viele Ladesitzungen reserviert wurden, und durch Änderungen in der Erzeugung von Strom in entsprechenden Stromversorgungsanlagen, die den Bereichen zugeordnet sind.

3. Das Verfahren gemäß Anspruch 1, **dadurch gekennzeichnet, dass** das Abrufen und die Übertragung von Datenstrings bezüglich der Buchungen zukünftiger Ladevorgänge von dem System (1) für die zukünftige Konfiguration des Stromnetzes in Folgendem besteht:
- dem Berechnen des Energiebedarfs zum Laden elektrischer Fahrzeuge (2) eines vordefinierten Bereichs durch Addieren der erwarteten Stromentnahmen von jeder Säule jeder Ladevorrichtung (3) in dem Bereich;
- dem Planen der Zuweisung einer Strommenge für das Laden elektrischer Fahrzeuge (2) an einen vordefinierten Bereich, wobei die Strommenge nicht niedriger ist als der Energiebedarf, der für einen solchen Bereich berechnet wurde, durch eine Konfiguration des Stromnetzes.

4. Das Verfahren gemäß Anspruch 3, **dadurch gekennzeichnet, dass** die Berechnung des Energiebedarfs in Echtzeit aktualisiert wird, in Abhängigkeit von eventuellen Löschungen von Buchungen und/oder der Durchführung neuer Buchungen für zukünftige Ladesitzungen, mit daraus folgender Aktualisierung der Zuweisung der Strommenge für das Laden elektrischer Fahrzeuge (2) zu einem zuvor eingeplanten vordefinierten Bereich.

5. Ein System zur Steuerung und Verwaltung des Ladens elektrischer Fahrzeuge (2) in einem Stromnetz, wobei die elektrischen Fahrzeuge von einem Typ sind, der gewählt ist aus Fahrzeugen mit ausschließlich elektrischen Motorantrieben und Fahrzeugen mit Hybrid-Motorantrieben; Folgendes umfassend:
- mindestens einen Hauptserver (4),
- mindestens ein Telekommunikationsnetz,
- mindestens eine Überwachungs- und Steuerungseinheit (5), die funktionell mit mindestens einer Stromzuführvorrichtung (6) verknüpft und über das Telekommunikationsnetz mit dem mindestens einen Hauptserver (4) verbunden ist, wobei die mindestens eine erste Überwachungs- und Steuerungseinheit (5) ausgebildet ist, um Daten bezüglich der Buchungen zukünftiger Ladevorgänge zu empfangen,
- mindestens eine zweite Überwachungs- und Steuerungseinheit (7) zum Laden von Vorrichtungen (3) mindestens eines Betreibers von Ladevorrichtungen (3) für elektrische Fahrzeuge (2),
- mindestens einen Computer (8), der verknüpft ist mit einem Benutzerkonto, gewählt aus einem Benutzer, einem Fahrer, einem entsprechenden elektrischen Fahrzeug (2), einer Person, die ebenfalls für das Fahrzeug (2) verantwortlich ist, und einer beliebigen Kombination davon;
wobei der Hauptserver (4) ausgebildet ist, um über das Telekommunikationsnetz mit der mindestens einen zweiten Überwachungs- und Steuerungseinheit (7) mindestens eines Betreibers elektrischer Ladevorrichtungen (3) für Fahrzeuge (2) verbunden zu werden, wobei der mindestens eine Computer (8) mit dem Benutzerkonto und mit dem mindestens einen Hauptserver (4) für die Durchführung von Vorgängen verbunden ist, die Buchungen mindestens einer Säule mindestens einer Ladevorrichtung (3) umfassen; wobei die Vorgänge mit einer vordefinierten Anzahl von Computern (8) geteilt werden, die mit entsprechenden Benutzerkonten und mit einer vordefinierten Anzahl von Zuführvorrichtungen (6) verknüpft sind, wobei die Vorgänge auch die Löschung der mindestens einen Säule umfassen, wobei die Informationen bezüglich Buchungen und/oder Löschung jeder Ladevorrichtung (3) es ermöglichen, die Menge an Strom, die von den Elektrofahrzeugen gezogen werden wird, mit Bezug auf Datum und Zeit, wann sie gezogen werden wird, zu berechnen; wobei der mindestens eine mit dem Benutzerkonto verknüpfte Computer (8) von einem Typ ist, der vorzugsweise gewählt ist aus einer Vorrichtung vom Typ eines Smartphones, eines Tablets, eines PCs, eines Taschencomputers, einer Smartwatch, eines Onboard-Prozessors des Fahrzeugs (2); wobei der mindestens eine Computer (8) eine Softwareanwendung implementiert, die ausgebildet ist, um sich mit Folgendem zu verknüpfen:
- den Batterien des Fahrzeugs (2) zur Analyse ihres Ladezustands und eventueller spezifischer Lademodi,
- einem Satelliten-Straßennavigationssystem des Fahrzeugs (2) oder einem zusätzlichen mit ihm verbundenen Navigationsgerät zur Planung von Routen und den erforderlichen Halten an Ladevorrichtungen (3),
- der zweiten Überwachungs- und Steuerungseinheit (7), die mit dem Hauptserver (4) über das Telekommunikationsnetz verbunden ist;
- wobei der mindestens eine Hauptserver (4) mindestens einen Generator von Datenstrings umfasst, um an die zweite Überwachungs- und Steuerungseinheit (7) für die Ladevorrichtungen (3) Echtzeitinformationen bezüglich der Buchung und entsprechenden Löschung spezifischer Ladevorrichtungen (3) zu senden und um an die Computer (8), die mit Benutzerkonten bezüglich spezifischer elektrischer Fahrzeuge (2) in Transit nahe der Ladevorrichtung (3), für welche eine Löschung einer Buchung gesendet wurde, eine Benachrichtigung zu senden, dass die Vorrichtung (3) unerwartet frei geworden ist; wobei das System ausgebildet ist, um das Stromnetz abhängig von dem erwarteten Energieverbrauch in Bezug auf die gebuchten Ladevorgänge und Informationen bezüglich der Buchung und entsprechenden Löschung spezifischer Ladevorrichtungen (3) zu konfigurieren; wobei die Konfiguration des Stromnetzes in Abhängigkeit vom Energieverbrauch in der Verstärkung des Stroms in den Bereichen, in denen viele Ladesitzungen reserviert wurden, und der Verminderung in anderen Bereichen besteht.

6. Das System gemäß Anspruch 5, **dadurch gekennzeichnet, dass** jede Stromzuführvorrichtung (6), die funktionell mit der ersten Überwachungseinheit (5) verknüpft ist, Mittel umfasst, um von dem Hauptserver (4) Datenstrings zu empfangen und an ihn zu senden, die die Verfügbarkeit von und Tarife für Strom in bestimmten Bereichen betreffen, wobei der Server (4) die Datenstrings an die Betreiber der Ladevorrichtungen (3) überträgt, die in solchen bestimmten Bereichen vorhanden sind.

7. Das System gemäß Anspruch 5, **dadurch gekennzeichnet, dass** der mindestens eine Computer (8) Vorrichtungen umfasst, um Daten von der zweiten Überwachungs- und Steuerungseinheit (7) zu empfangen und an sie zu senden, um Ladevorrichtungen (3) in Abhängigkeit von einer bestimmten programmierten Route zu bestimmten Daten und bestimmten Zeiten zu buchen.

## Revendications

1. Procédé de gestion et de planification de flux énergétiques destinés à charger des véhicules électriques (2) sur un réseau électrique, qui consiste à :
- définir un système (1) de contrôle et de gestion du chargement des véhicules électriques (2) qui convienne à la réservation de chaque point d'alimentation en électricité individuel d'au moins une installation de chargement (3) pour véhicules électriques (2), à l'aide d'un compte utilisateur respectif ;
- associer à un serveur principal (4) dudit système (1) au moins une première unité de supervision et de contrôle (5) qui soit fonctionnellement associée à au moins un fournisseur d'électricité (6) et mise en interface avec ledit serveur principal (4) via un réseau de télécommunications ;
- prévoir au moins une deuxième unité de supervision et de contrôle (7) pour les installations de chargement (3) d'au moins un opérateur d'installations de chargement (3) pour véhicules électriques (2), ladite deuxième unité de supervision et de contrôle (7) étant associée audit serveur principal (4) via ledit réseau de télécommunications ;
- prévoir au moins un ordinateur (8) associé à un compte utilisateur choisi parmi un utilisateur, un conducteur, un véhicule électrique correspondant (2), une personne conjointement responsable du véhicule (2), et toute combinaison de ceux-ci, ledit au moins un ordinateur (8) étant associé audit compte utilisateur et audit serveur principal (4), pour l'exécution d'opérations comprenant des réservations d'au moins un stand d'au moins une installation de chargement (3), lesdites opérations étant partagées avec un nombre prédéfini d'ordinateurs (8) qui sont associés à des comptes utilisateurs respectifs et à un nombre prédéfini de fournisseurs (6) ;
- ledit au moins un ordinateur (8) associé audit compte utilisateur étant d'un type de préférence choisi parmi un dispositif de type smartphone, tablette, PC, ordinateur portable, montre connectée, processeur embarqué du véhicule (2), ledit au moins un ordinateur (8) exécutant une application logicielle adaptée pour faire interface avec :
- les batteries du véhicule (2), pour l'analyse de leur statut de chargement et des éventuels modes de chargement spécifiques,
- un système de navigation routière par satellite du véhicule (2), ou un dispositif de navigation supplémentaire relié à celui-ci, afin de planifier des itinéraires et les arrêts nécessaires aux installations de chargement (3),
- ladite deuxième unité de supervision et de contrôle (7) ;
- envoyer, par le serveur principal (4), à la deuxième unité de supervision et de contrôle (7) pour les installations de chargement (3), des informations en temps réel relatives à la réservation et à l'annulation correspondante d'installations de chargement spécifiques (3), et envoyer, aux ordinateurs (8) associés aux comptes utilisateurs liés aux véhicules électriques spécifiques (2) en transit près de l'installation de chargement (3) pour laquelle une annulation de réservation a été envoyée, une alerte selon laquelle l'installation (3) est devenue indisponible de manière imprévue ;
- acquérir, auprès dudit système (1), des chaînes de données relatives aux réservations de futures opérations de chargement, et transmettre celles-ci à la au moins une première unité de supervision et de contrôle (5) ;
- configurer le réseau électrique en fonction de la consommation d'énergie prévue liée auxdites opérations de chargement réservées et des informations relatives à la réservation et à l'annulation correspondante d'installations de chargement spécifiques, la configuration dudit réseau électrique selon la consommation d'énergie consistant à augmenter l'électricité disponible dans les zones dans lesquelles de nombreuses sessions de chargement ont été réservées, et à la réduire dans les autres zones.

2. Procédé selon la revendication 1, **caractérisé en ce que** ladite augmentation d'énergie est réalisée via la redirection des flux de courant électrique le long des lignes électriques qui mènent aux zones dans lesquelles de nombreuses sessions de chargement ont été réservées, et via des variations de génération d'électricité au sein des postes de génération d'énergie respectifs affectés auxdites zones.

3. Procédé selon la revendication 1, **caractérisé en ce que** l'acquisition et la transmission, par ledit système (1), de chaînes de données relatives aux réservations de futures opérations de chargement pour la configuration future du réseau électrique consistent à :
- calculer la demande en énergie pour le chargement de véhicules électriques (2) d'une zone prédéfinie, en additionnant les retraits d'énergie depuis chaque stand de chaque installation de chargement (3) présente dans ladite zone ;
- planifier l'affectation d'une quantité d'énergie pour le chargement de véhicules électriques (2) à une zone prédéfinie, ladite quantité d'énergie n'étant pas inférieure à la demande en énergie calculée pour ladite zone via une configuration du réseau électrique.

4. Procédé selon la revendication 3, **caractérisé en ce que** le calcul de la demande en énergie est mis à jour en temps réel, en fonction des éventuelles annulations de réservations et/ou de la réalisation de nouvelles réservations pour de futures sessions de changement, avec une mise à jour consécutive de l'affectation de la quantité d'énergie pour le chargement de véhicules électriques (2) à une zone prédéfinie préalablement planifiée.

5. Système de contrôle et de gestion du chargement de véhicules électriques (2) sur un réseau électrique, lesdits véhicules électriques étant d'un type choisi parmi des véhicules équipés exclusivement de moteurs électriques et des véhicules équipés de moteurs hybrides, comprenant :
- au moins un serveur principal (4),
- au moins un réseau de télécommunications,
- au moins une première unité de supervision et de contrôle (5) fonctionnellement associée à au moins un fournisseur d'électricité (6) et en interface avec ledit au moins un serveur principal (4) via ledit réseau de télécommunications, ladite au moins une première unité de supervision et de contrôle (5) étant adaptée pour recevoir des données relatives aux réservations de futures opérations de chargement,
- au moins une deuxième unité de supervision et de contrôle (7) pour les installations de chargement (3) d'au moins un opérateur d'installations de chargement (3) pour véhicules électriques (2),
- au moins un ordinateur (8) associé à un compte utilisateur choisi parmi un utilisateur, un conducteur, un véhicule électrique correspondant (2), une personne conjointement responsable du véhicule (2), et toute combinaison de ceux-ci,
ledit serveur principal (4) étant adapté pour être relié, via ledit réseau de télécommunications, à ladite au moins une deuxième unité de supervision et de contrôle (7) d'au moins un opérateur d'installations de chargement électrique (3) pour véhicules (2), ledit au moins un ordinateur (8) étant associé audit compte utilisateur et audit au moins un serveur principal (4), pour l'exécution d'opérations comprenant des réservations d'au moins un stand d'au moins une installation de chargement (3), lesdites opérations étant partagées avec un nombre prédéfini d'ordinateurs (8) qui sont associés à des comptes utilisateurs respectifs et à un nombre prédéfini de fournisseurs (6), lesdites opérations comprenant également l'annulation dudit au moins un stand, les informations relatives aux réservations et/ou à l'annulation de chaque installation de chargement (3) permettant de calculer la quantité d'énergie qui sera utilisée par lesdits véhicules électriques en référence à la date et à l'heure d'utilisation de ladite énergie, ledit au moins un ordinateur (8) associé audit compte utilisateur étant d'un type de préférence choisi parmi un dispositif de type smartphone, tablette, PC, ordinateur portable, montre connectée, processeur embarqué du véhicule (2), ledit au moins un ordinateur (8) exécutant une application logicielle qui est adaptée pour faire interface avec :
- les batteries du véhicule (2), pour l'analyse de leur statut de chargement et des éventuels modes de chargement spécifiques,
- un système de navigation routière par satellite du véhicule (2), ou un dispositif de navigation supplémentaire relié à celui-ci, afin de planifier des itinéraires et les arrêts nécessaires aux installations de chargement (3),
- ladite deuxième unité de supervision et de contrôle (7) associée audit serveur principal (4) via ledit réseau de télécommunications ;
- ledit au moins un serveur principal (4) comprenant au moins un générateur de chaînes de données destiné à envoyer, à la deuxième unité de supervision et de contrôle (7) pour les installations de chargement (3), des informations en temps réel relatives à la réservation et à l'annulation correspondante d'installations de chargement spécifiques (3), et à envoyer, aux ordinateurs (8) associés aux comptes utilisateurs liés aux véhicules électriques spécifiques (2) en transit près de l'installation de chargement (3) pour laquelle une annulation de réservation a été envoyée, une alerte selon laquelle l'installation (3) est devenue indisponible de manière imprévue, ledit système étant adapté pour configurer le réseau électrique en fonction de la consommation d'énergie prévue liée auxdites opérations de chargement réservées, et des informations relatives à la réservation et à l'annulation correspondante d'installations de chargement spécifiques (3), la configuration dudit réseau électrique selon la consommation d'énergie consistant à augmenter l'électricité disponible dans les zones dans lesquelles de nombreuses sessions de chargement ont été réservées, et à la réduire dans les autres zones.

6. Système selon la revendication 5, **caractérisé en ce que** chaque fournisseur d'électricité (6) fonctionnellement associé à ladite première unité de supervision (5) comprend un moyen d'envoyer, audit serveur principal (4), des chaînes de données relatives à la disponibilité et aux tarifs de l'électricité dans des zones spécifiques, ledit serveur (4) transférant lesdites chaînes de données auxdits opérateurs des installations de chargement (3) qui sont présentes dans lesdites zones spécifiques.

7. Système selon la revendication 5, **caractérisé en ce que** ledit au moins un ordinateur (8) comprend des appareils destinés à envoyer des données à ladite deuxième unité de supervision et de contrôle (7) pour la réservation d'installations de chargement (3), en fonction d'un itinéraire programmé spécifique à des dates et des heures spécifiques.
